# EUROPEAN PATENT APPLICATION

(11) **EP 2 773 139 A1**
(43) Date of publication of application: **03.09.2014**
(21) Application number: 12843543.5
(22) Date of filing: 11.07.2012
(51) Int. Cl.: H04W 4/06, H04W 76/02

(54) **METHOD AND SYSTEM FOR ESTABLISHING MCE CONTROL CLUSTER SESSION**

(30) Priority: 24.10.2011 CN 201110325766
(71) Applicant: ZTE Corporation, Shenzhen City, Guangdong 518057 (CN)
(72) Inventor: YAN, Zhiwei, Shenzhen Guangdong 518057 (CN); LI, Qun, Shenzhen Guangdong 518057 (CN)
(74) Representative: Zerbi, Guido Maria
(86) International application number: PCT/CN2012/078451
(87) International publication number: WO 2013/060167

(57) **Abstract**

A method and system for a Multimedia Broadcast Multicast Service Coordination Entity (MCE) controlling cluster session setup are provided. The method comprises: a core network sending a cluster session setup request message to a coordination entity MCE after receiving a cluster call setup request message; after receiving the cluster session setup request message, the MCE reconstructing the cluster session setup request message to send to a related base station; the related base station performing a cluster session setup operation according to the message sent by the MCE and sending a cluster session setup response message to the MCE; and after receiving the response message, the MCE reconstructing the cluster session setup response message to send to the core network, then constructing a cluster session scheduling indication message according to a cluster session indication message respond thereto by the core network to send to the related base station, and notifying the related base station to schedule a cluster session service. The present application solves the problem of the MCE controlling cluster session setup in a Time Division-Synchronous Code Division Multiple Access Long Term Evolution (TD-LTE) broadband digital cluster system based on an Evolved Multimedia Broadcast Multicast Service (eMBMS).

## Description

### Technical Field

The present document relates to the wireless communication field, and in particular, to a method and system for session control in a Time Division-Synchronous Code Division Multiple Access Long Term Evolution (TD-LTE) broadband digital cluster system based on an Evolved Multimedia Broadcast Multicast Service (eMBMS).

### Background of the Related Art

The EMBMS is a kind of broadcast technology in the next generation wireless access network LTE, and sends the high-speed multimedia data service to all users or some user group in the network at the same time. The EMBMS is included in the existing 3G network or a broadcast system in the LTE wireless access network. The EMBMS is an upgrade of the Broadcast Multicast Service (MBMS) system introduced by the R6. Different from the MBMS of the R6, the MBMS provides the MBMS service through adding the Broadcast Multicast Service Center (BM-SC) in the 3G system and adding the MBMS function into the existing network entity. While the whole logic framework is provided in the EMBMS, including the MBMS logic entity defined in the core network and the Multi-cell/Multicast Coordination Entity (MCE) defined in the access network, and the related control plane and the user plane interface. Such a whole and independent logic framework, as the EMBMS, is convenient for flexibly deploying the functions of every part of the MBMS, and is beneficial to the resource optimization and performance promotion of the MBMS.

The cluster communication system is a dedicated wireless communication system developed for meeting the command and dispatch requirement of the industry user and facing the particular industry application; a large number of wireless users share a little wireless channel in the system, the command and dispatch are the main applications, and it is a kind of multipurpose wireless communication system with high capacity and efficiency. The cluster communication system has an extensive application market in the fields such as government department, public safety, emergency communication, electricity, civil aviation, petrochemical industry and army, etc..

At present, there is no specific instruction on the method and procedure how the MCE controls cluster session setup in the TD-LTE broadband digital cluster system based on the eMBMS in the relevant standard and protocol.

### Summary of the Invention

The objective of the present document is to provide a method and system for the MCE controlling cluster session setup, to better solve the problem of the MCE controlling cluster session setup in the TD-LTE broadband digital cluster system based on the eMBMS.

According to an aspect of the present document, a method for a Multimedia Broadcast Multicast Service Coordination Entity (MCE) controlling cluster session setup is provided, comprising:
a core network sending a cluster session setup request message to a coordination entity MCE after receiving a cluster call setup request message;
after receiving the cluster session setup request message, the MCE reconstructing the cluster session setup request message to send to a related base station;
the related base station performing a cluster session setup operation according to the cluster session setup request message sent by the MCE and sending a cluster session setup response message to the MCE after the operation is completed; and
after receiving the cluster session setup response message, the MCE reconstructing the cluster session setup response message to send to the core network, then constructing a cluster session scheduling indication message according to a cluster session indication message responded thereto by the core network to send to the related base station, and notifying the related base station to schedule a cluster session service.

Preferably, before the core network receives the cluster call setup request message, the method further comprises:
a certain user in a cluster service session group sending the cluster call setup request message to the core network via a base station.

Preferably, the step of after receiving the cluster session setup request message, the MCE reconstructing the cluster session setup request message comprises:
the MCE judging whether to accept the cluster session setup request according to a Quality of Service (Qos) parameter in the cluster session setup request message; and
if the MCE accepts the cluster session setup request, then obtaining cluster session information from the cluster session setup request message and storing the cluster session information, and then reconstructing the cluster session setup request message.

Preferably, the related base station performing a cluster session setup operation comprises:
the related base station setting up a wireless access bearer for a cluster session according to the cluster session setup message;
the related base station setting up channel mapping for the cluster session according to the cluster session setup message and the wireless access bearer;
the related base station performing a radio resource control protocol (RRC) connection reconfiguration with a user of the cluster session according to the cluster session setup message; and
the related base station adding a multicast address of the cluster session according to the cluster session setup message.

Preferably, the related base station setting up a wireless access bearer for a cluster session according to the cluster session setup message comprises:
a base station, where a speaking-right user of the cluster session locates, setting up an uplink S1-U bearer and uplink wireless bearer;
a base station, where a user in a cluster session service group locates, setting up a cluster session downlink shared link M1 bearer and downlink wireless bearer.

Preferably, the related base station performing an RRC connection reconfiguration with a user according to the cluster session setup message comprises:
the related base station sending a radio resource control protocol (RRC) connection reconfiguration request to the user;
after the user receives the RRC connection reconfiguration request, if the user is a speaking-right user, then configuring an uplink shared channel UL-SCH; if the user is a user in the cluster session service group, then configuring a downlink multicast service channel MTCH; and
the user sending a RRC connection reconfiguration completion message to the related base station after channel configuration is completed.

Preferably, the MCE constructing a cluster session scheduling indication message comprises:
the MCE constructing the cluster session scheduling indication message according to the cluster session indication message and the stored cluster session information.

According to another aspect of the present document, a system for a Multimedia Broadcast Multicast Service Coordination Entity (MCE) controlling cluster session setup is provided, comprising:
a core network, configured to send a cluster session setup request message to a coordination entity MCE after receiving a cluster call setup request message;
an MCE, configured to after receiving the cluster session setup request message, reconstruct the cluster session setup request message to send to a related base station, and after receiving a cluster session setup response message responded by the related base station, reconstruct the cluster session setup response message to send to the core network, then construct a cluster session scheduling indication message according to a cluster session indication message responded thereto by the core network to send to the related base station, and notify the related base station to schedule a cluster session service; and
a base station, configured to perform a cluster session setup operation according to the cluster session setup request message sent by the MCE and send the cluster session setup response message to the MCE after the operation is completed.

Preferably, the MCE is further configured to judge whether to accept the cluster session setup request according to a Quality of Service (Qos) parameter in the cluster session setup request message; and if the MCE accepts the cluster session setup request, then store cluster session information according to the cluster session setup request message, and reconstruct the cluster session setup request message.

Preferably, the base station is further configured to set up a wireless access bearer for a cluster session according to the cluster session setup message, set up channel mapping for the cluster session according to the cluster session setup message and the wireless access bearer, perform a radio resource control protocol (RRC) connection reconfiguration with a user of the cluster session according to the cluster session setup message, and add a multicast address of the cluster session according to the cluster session setup message.

A Multimedia Broadcast Multicast Service Coordination Entity (MCE), wherein the MCE is configured to after receiving a cluster session setup request message, reconstruct the cluster session setup request message to send to a related base station, and after receiving a cluster session setup response message responded by the related base station, reconstruct the cluster session setup response message to send to the core network, then construct a cluster session scheduling indication message according to a cluster session indication message responded thereto by the core network to send to the related base station, and notify the related base station to schedule a cluster session service.

Preferably, the MCE is further configured to judge whether to accept the cluster session setup request according to a Quality of Service (Qos) parameter in the cluster session setup request message; and if the MCE accepts the cluster session setup request, then store cluster session information according to the cluster session setup request message, and reconstruct the cluster session setup request message.

The advantage of the embodiment of the present document is to explicate a specific method of an MCE controlling cluster session in the TD-LTE broadband digital cluster system based on the eMBMS.

### Brief Description of Drawings

FIG. 1 is a schematic diagram of a method for an MCE controlling cluster session in a TD-LTE broadband digital cluster system based on eMBMS provided by an embodiment of the present document;
FIG. 2 is a flow chart of a method for an MCE controlling cluster session in a TD-LTE broadband digital cluster system based on eMBMS provided by an embodiment of the present document;
FIG. 3 is a diagram of channel mapping in a TD-LTE broadband digital cluster system based on eMBMS provided by an embodiment of the present document;
FIG. 4 is a network framework diagram of a system for an MCE controlling cluster session in a TD-LTE broadband digital cluster system based on eMBMS provided by an embodiment of the present document.

### Preferred Embodiments of the Invention

The preferred embodiments of the present document are described in detail with reference to the accompanying drawings hereinafter. It should be understood that, the embodiments illustrated hereinafter are used to describe and explain the present document, rather than constituting an inappropriate limitation on the present document.

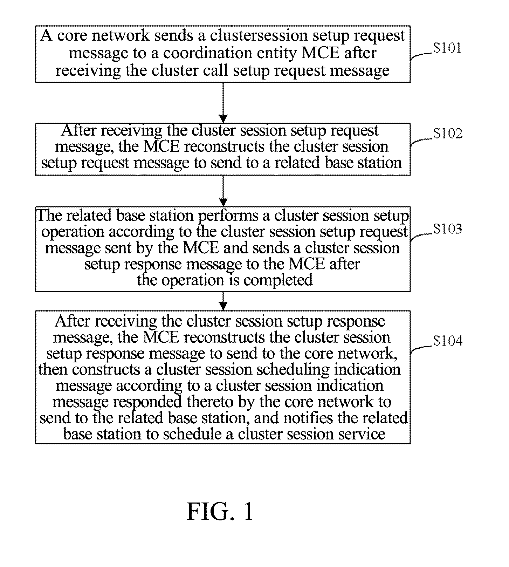

FIG. 1 is a schematic diagram of a method for an MCE controlling cluster session in a TD-LTE broadband digital cluster system based on eMBMS provided by an embodiment of the present document. As shown in FIG. 1, the method includes the following steps.

In step S101, a core network sends a cluster session setup request message to a coordination entity MCE after receiving the cluster call setup request message.

In step S102, after receiving the cluster session setup request message, the MCE reconstructs the cluster session setup request message to send to a related base station.

In step S103, the related base station performs a cluster session setup operation according to the cluster session setup request message sent by the MCE and sends a cluster session setup response message to the MCE after the operation is completed.

In step S104, after receiving the cluster session setup response message, the MCE reconstructs the cluster session setup response message to send to the core network, then constructs a cluster session scheduling indication message according to a cluster session indication message responded thereto by the core network to send to the related base station, and notifies the related base station to schedule a cluster session service.

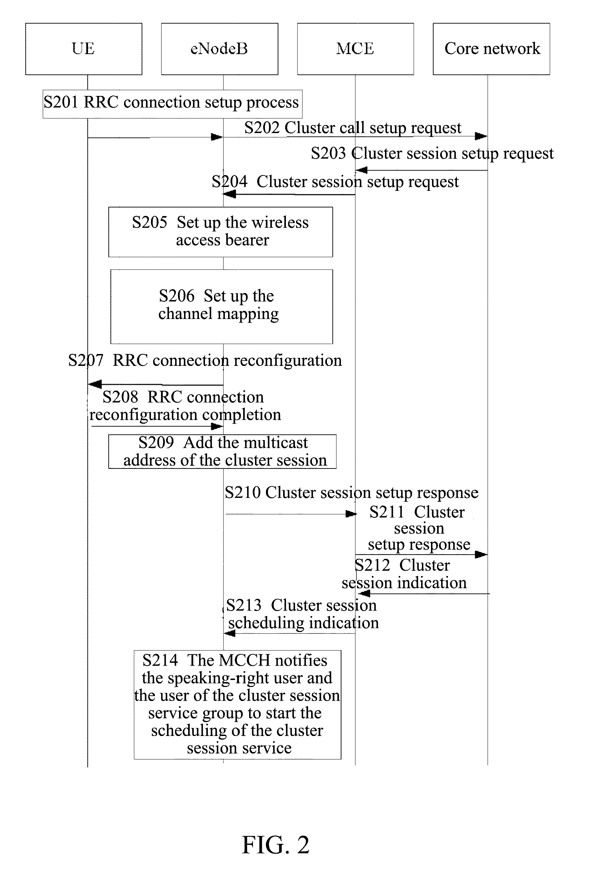

FIG. 2 is a specific flow chart of a method for an MCE controlling cluster session in a TD-LTE broadband digital cluster system based on eMBMS provided by an embodiment of the present document.

In order to cooperate with the description of the method in FIG. 2, a specific realization mode is provided for the message involved in the method hereinafter, this is only used for proving the feasibility of the session control method, and the specific realization of the message is not limited to this mode.

The request type in the connection request of the Non Access Stratum (NAS) signaling Packet Data Network (PDN) defined in the 3GPP TS 24.301 V10.3.0 protocol is extended, and the type "cluster call setup request" is added, referring to the following table:

| Request type value (octet 1) | | | |
|---|---|---|---|
| Bits | | | |
| 3 | 2 | 1 | |
| 0 | 0 | 1 | initial request |
| 0 | 1 | 0 | Handover |
| 0 | 1 | 1 | Unused. If received, the network shall interpret this as "initial request". |
| 1 | 0 | 0 | emergency |
| Note: the existing message type is extended, and "cluster call setup request" is added. All other values are reserved. | | | |
| | | | |
| Bit 4 of octet 1 is spare and shall be coded as zero. | | | |

According to the 3GPP TS 36.444 V10.2.0 protocol, 256 different messages can be supported at most between the core network Mobility Management Entity (MME) and the M3 signaling interface of the MCE. The MBMS system only uses less than about 20 messages at present, and the "cluster session setup request", "cluster session setup response" and "cluster session indication" messages related with the cluster session are expanded among the M3 signaling interfaces, wherein, the "cluster session setup request" message mainly includes the following information:
Message Type: the message type is "cluster session setup request";
MME MBMS M3AP ID: a flag ID of an M3 Application Protocol (M3AP) entity of the M3 interface at the MME side;
MCE MBMS M3AP ID: a flag ID of an M3AP entity of the M3 interface at the MCE side;
TMGI: an ID of the cluster session service group;
MBMS Session Identity: a flag ID of the cluster session;
MBMS Session Duration: a duration of the cluster session;
MBMS Service Area: a cluster session area, that is, which Evolved Node B (eNodeB) and which cells are included;
IP Multicast Address: a multicast address of the cluster session downlink service;
IP Source Address: source address of the cluster session downlink service;
E-RAB to be Setup List: a wireless access bearer setup list, including the information, such as, relevant Quality of Service (QoS) parameter of the uplink S1-U bearer and the downlink M1 bearer related with the cluster session, bearer ID, etc.;
wherein, the "cluster session setup response" message mainly includes the following information:
   Message Type: the message type is "cluster session setup response";
   MME MBMS M3AP ID: a flag ID of an M3AP entity of the M3 interface at the MME side;
   MCE MBMS M3AP ID: a flag ID of an M3AP entity of the M3 interface at the MCE side;
   Status: the result of the response, "successful" or "refused", etc.;
   wherein, the "cluster session indication" message mainly includes the following information:
Message Type: the message type is "cluster session indication";
   MME MBMS M3AP ID: a flag ID of an M3AP entity of the M3 interface at the MME side;
   MCE MBMS M3AP ID: a flag ID of an M3AP entity of the M3 interface at the MCE side;
   MBMS Session Identity: a flag ID of the cluster session;
   Minimum Time to MBMS Data Transfer: a reference time point of the cluster session service transmission.

According to the 3GPP TS 36.444 V10.2.0 protocol, the M2 signaling interface between the MCE and the eNodeB can support 256 different messages at most. The MBMS system only uses less than about 20 messages at present, and the "cluster session setup request", and "cluster session setup response" related with the cluster session are expanded among the M2 signaling interfaces, wherein, the "cluster session setup request" message mainly includes the following information:
Message Type: the message type is "cluster session setup request";
MME MBMS M2AP ID: a flag ID of an M2 Application Protocol (M2AP) entity of the M2 interface at the MCE side;
eNB MCE MBMS M2AP ID: a flag ID of an M2AP entity of the M2 interface at the eNB side;
TMGI: an ID of the cluster session service group;
MBMS Session Identity: a flag ID of the cluster session;
MBMS Service Area: a cluster session area, that is, which Evolved Node B (eNodeB) and which cells are included;
IP Multicast Address: a multicast address of the cluster session downlink service;
IP Source Address: a source address of the cluster session downlink service;
E-RAB to be Setup List: a wireless access bearer setup list, including the information, such as, relevant Quality of Service (QoS) parameter of the uplink S1-U bearer and the downlink M1 bearer related with the cluster session, bearer ID, etc.;
wherein, the "cluster session setup response" message mainly includes the following information:
   Message Type: the message type is "cluster session setup response";
   MME MBMS M2AP ID: a flag ID of an M2AP entity of the M2 interface at the MCE side;
   eNB MCE MBMS M2AP ID: a flag ID of an M2AP entity of the M2 interface at the eNB side;
   Status: the result of the response, "success" or "refuse", etc.

As shown in FIG. 2, the method specifically includes the following steps.

In step S201, the UE is attached to the E-NodeB and the RRC connection setup is finished.

When the UE is in the idle mode, if the NAS of the UE requests to set up the signaling connection, the UE will initiate an RRC connection setup request. The Radio Network Controller (RNC) judges whether to accept or refuse the RRC connection setup request according to a specific algorithm after receiving the RRC connection request message of the UE. If it is accepted, it is judged once more whether to set up in a dedicated channel or a public channel according to a specific Radio Resource algorithm. The RRC connection setup channels are different, and the RRC connection setup procedures are different as well. If the RRC connection cannot be set up, then the RNC refuses the RRC connection setup this time. The RRC connection setup procedure is a prior art, and will not go into details here.

In step S202, a speaking-right user in a cluster service session group initiates a cluster call setup request.

The speaking-right user sends the defined NAS message, "cluster call setup request", to an eNodeB through a UU port, and the eNodeB sends it to the core network through an S1 signaling port. The user can be a user equipment (UE), a wireless dispatching station, a wireless mobile transceiver or a wired dispatching station. When the speaking-right user initiates the cluster service call setup request to the core network, the request message includes a flag indicating that the type is cluster service call request.

In step S203, the core network initiates the cluster session setup request to the MCE after receiving the cluster call setup request.

After the core network receives the cluster call setup request, it initiates the cluster session setup request from the M3 interface to the MCE. The request message includes the information, such as, the ID of the cluster session service group, the flag ID of the cluster session, the duration of the cluster session, the cluster session area, the multicast address of the cluster session downlink service, the source address of the cluster session downlink service, and the relevant Quality of Service (QoS) parameter of the uplink S1-U bearer and the downlink M1 bearer related with the cluster session, the bearer ID, etc.

In step S204, the MCE sends the cluster session setup request to the eNodeB.

After the MCE receives the cluster session setup request, it is judged whether to accept according to the QoS parameter related with the cluster session. In the present embodiment, it is accepted successfully. The MCE stores the cluster session information according to the cluster session setup request, reconstructs the "cluster session setup request" message of the M2 interface, and sends the reconstructed "cluster session setup request" message to the cluster session area, that is, the related eNodeB indicated by the "MBMS Service Area", to notify the relevant eNodeB to perform the resources mapping at the wireless side and the bearer setup etc.

The cluster session request message includes the information, such as, the ID of the cluster session service group, the flag ID of the cluster session, the cluster session area, the multicast address of the cluster session downlink service, the source address of the cluster session downlink service, and the relevant Quality of Service (QoS) parameter of the uplink S1-U bearer and the downlink M1 bearer related with the cluster session, the bearer ID, etc.

In step S205, after the eNodeB receives the cluster session setup request initiated by the MCE, the wireless access bearer (E-RAB) is set up for the cluster session.

After the eNodeB receives the cluster session setup request initiate by the MCE, according to the uplink and downlink bearer information ("E-RAB to be Setup List") including the cluster service QoS parameter and transmission bearer information related with the cluster session, it sets up the wireless access bearer including the uplink S1-U bearer and the downlink M1 bearer of the cluster session, for the cluster session. The wireless access bearer setup includes: the uplink S1-U bearer and the uplink wireless bearer of the eNodeB where the speaking-right user of the cluster session locates, and the downlink shared link M1 bearer and the downlink wireless bearer of the eNodeB where the user of the cluster session service group locates.

In step S206, the eNodeB sets up the channel mapping.

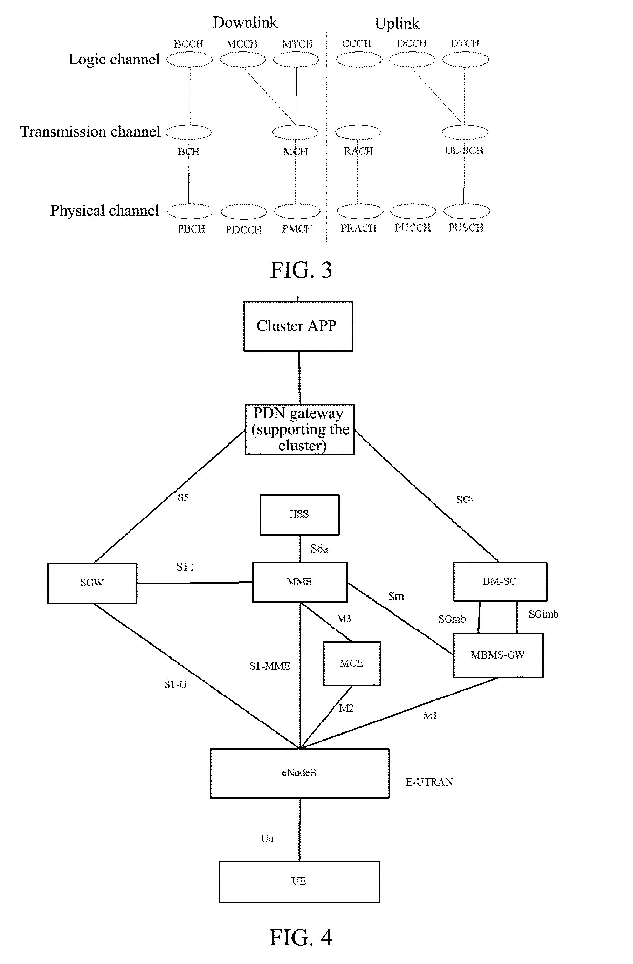

After the eNodeB sets up the wireless access bearer, the relevant wireless channel mapping at the eNodeB side is completed by combining with the ID of the cluster session service group and the flag ID of the cluster session, as shown in FIG. 3, including a downlink Multicast Control Channel (MCCH) and a Multicast Control Channel (MTCH) mapped to a Multicast Channel (MCH), and then it is to map to a Physical Multicast Channel (PMCH) by the MCH, and an uplink Dedicated Control Channel (DCCH) and a Dedicated Traffic Channel (DTCH) mapped to an Uplink Shared Channel (UL-SCH), and then it is to map to an Physical Uplink Shared Channel (PUSCH) by the UL-SCH.

In step S207, the eNodeB sends the RRC connection reconfiguration request to the user.

In step S208, the user notifies the eNodeB that the RRC connection reconfiguration is completed.

If the user receiving the RRC connection reconfiguration is the speaking-right user, then the Uplink Shared Channel (UL-SCH) is configured; if the user receiving the RRC connection reconfiguration is a user of the cluster session service group, then the downlink Multicast Traffic Channel (MTCH) is configured. After the user configures the channel, it sends a response of the RRC connection reconfiguration completion to the eNodeB.

In step S209, the eNodeB adds the multicast address of the cluster session.

The eNodeB adds the multicast address of the cluster session according to the multicast address of the cluster session downlink service (i.e. "IP Multicast Address") and the source address of the cluster session downlink service (i.e. "IP Source Address").

In step S210, the eNodeB sends the "cluster session setup response" message to the MCE.

The eNodeB where the speaking-right user locates sends the "cluster session setup response" message to the MCE.

In step S211, the MCE sends the "cluster session setup response" message to the core network.

In step S212, the core network sends the "cluster session indication" message to the MCE.

The core network sends the cluster session indication to the MCE, including the information of the reference time point when the cluster session starts.

In step S213, the MCE sends the "cluster session scheduling indication" message to the eNodeB.

The MCE sends the cluster session scheduling indication to the eNodeB according to the cluster session information stored in step S204 and the information of the reference time point when the cluster session starts.

In step S214, the eNodeB starts the scheduling of the cluster session service according to the "cluster session scheduling indication".

The eNodeB notifies the speaking-right user and the user of the cluster session service group by using the MCCH according to the cluster session scheduling indication sent by the MCE to start the scheduling of the cluster session service.

FIG. 4 is a network framework diagram of a system for an MCE controlling cluster session in a TD-LTE broadband digital cluster system based on eMBMS provided by an embodiment of the present document. As shown in FIG. 4, the system includes UE, eNodeB, Serving Gateway (SGW), MCE, MME, Home Subscriber Server (HSS), Broadcast Multicast Service Center (BM-SC), MBMS GateWay (MBMS-GW), PDN gateway, and cluster APP. Wherein, the MME, the SGW and the PDN gateway constitute the core network.

In the present embodiment, the BM-SC is connected to the MBMS-GW through the interfaces SGmb and SGimb, wherein, the SGmb is a control plane interface, the SGimb is used for transmitting the MBMS data. The PDN gateway is connected to the SGW and the BM-SC respectively through the interfaces S5 and SGi, meanwhile, the PDN gateway is connected to the cluster APP. The HSS is connected to the MME through the interface S6a. The MME is connected to the SGW, the eNodeB, the MCE and the MBMS-GW respectively through the interfaces S11, S1-MME, M3 and Sm. The eNodeB is connected to the SGW, MCE, MBMS-GW and UE through the interfaces S1-U, M2, M1 and Uu.

The core network is configured to send a cluster session setup request message to a coordination entity MCE after receiving a cluster call setup request message.

The MCE is configured to after receiving the cluster session setup request message, reconstruct the cluster session setup request message to send to a related base station, and after receiving the cluster session setup response message responded by the related base station, reconstruct a cluster session setup response message to send to the core network, then construct a cluster session scheduling indication message according to a cluster session indication message responded thereto by the core network to send to the related base station, and notify the related base station to schedule a cluster session service; and the MCE is further configured to judge whether to accept the cluster session setup request according to a Quality of Service (Qos) parameter in the cluster session setup request message; and if the MCE accepts the cluster session setup request, then store cluster session information according to the cluster session setup request message, and reconstruct the cluster session setup request message.

The base station is configured to perform a cluster session setup operation according to the cluster session setup request message sent by the MCE and send the cluster session setup response message to the MCE after the operation is completed. The related base station is further configured to set up a wireless access bearer for a cluster session according to the cluster session setup message, set up channel mapping for the cluster session according to the cluster session setup message and the wireless access bearer, perform a radio resource control protocol (RRC) connection reconfiguration with a user of the cluster session according to the cluster session setup message, and add a multicast address of the cluster session according to the cluster session setup message.

In the present embodiment, other components except the core network, the MCE and the eNodeB are all related art, and will not go into detail here.

In conclusion, the present document explicates a specific method of the MCE controlling cluster session in the TD-LTE broadband digital cluster system based on the eMBMS, and better solves the problem of the MCE controlling cluster session setup in the TD-LTE broadband digital cluster system based on the eMBMS.

Although the above description illustrates the present document in detail, the present document is not limited to this. Those skilled in the art can make the various modifications according to the principle of the present document. And all of these modifications according to the theory of the present document should be embodied in the scope of the appended claims of the present document.

### Industrial Applicability

The advantage of the embodiment of the present document is to explicate a specific method for an MCE controlling cluster session in the TD-LTE broadband digital cluster system based on the eMBMS.

## Claims

1. A method for a Multimedia Broadcast Multicast Service Coordination Entity (MCE) controlling cluster session setup, comprising:
a core network sending a cluster session setup request message to a coordination entity MCE after receiving a cluster call setup request message;
after receiving the cluster session setup request message, the MCE reconstructing the cluster session setup request message to sending to a related base station;
the related base station performing a cluster session setup operation according to the cluster session setup request message sent by the MCE and sending a cluster session setup response message to the MCE after the operation is completed; and
after receiving the cluster session setup response message, the MCE reconstructing the cluster session setup response message to send to the core network, then constructing a cluster session scheduling indication message according to a cluster session indication message responded thereto by the core network to send to the related base station, and notifying the related base station to schedule a cluster session service.

2. The method according to claim 1, before the core network receives the cluster call setup request message, further comprising:
a certain user in a cluster service session group sending the cluster call setup request message to the core network via a base station.

3. The method according to claim 1, wherein, the step of after receiving the cluster session setup request message, the MCE reconstructing the cluster session setup request message comprises:
the MCE judging whether to accept the cluster session setup request according to a Quality of Service (Qos) parameter in the cluster session setup request message; and
if the MCE accepts the cluster session setup request, then obtaining cluster session information from the cluster session setup request message and storing the cluster session information, and then reconstructing the cluster session setup request message.

4. The method according to claim 3, wherein, the related base station performing a cluster session setup operation comprises:
the related base station setting up a wireless access bearer for a cluster session according to the cluster session setup message;
the related base station setting up channel mapping for the cluster session according to the cluster session setup message and the wireless access bearer;
the related base station performing a radio resource control protocol (RRC) connection reconfiguration with a user of the cluster session according to the cluster session setup message; and
the related base station adding a multicast address of the cluster session according to the cluster session setup message.

5. The method according to claim 4, wherein, the related base station setting up a wireless access bearer for a cluster session according to the cluster session setup message comprises:
a base station, where a speaking-right user of the cluster session locates, setting up an uplink S1-U bearer and uplink wireless bearer;
a base station, where a user in a cluster session service group locates, setting up a cluster session downlink shared link M1 bearer and downlink wireless bearer.

6. The method according to claim 4, wherein, the related base station performing an RRC connection reconfiguration with a user according to the cluster session setup message comprises:
the related base station sending a radio resource control protocol (RRC) connection reconfiguration request to the user;
after the user receives the RRC connection reconfiguration request, if the user is a speaking-right user, then configuring an uplink shared channel UL-SCH; if the user is a user in the cluster session service group, then configuring a downlink multicast service channel MTCH; and
the user sending a RRC connection reconfiguration completion message to the related base station after channel configuration is completed.

7. The method according to claims 3-6, wherein, the MCE constructing a cluster session scheduling indication message comprises:
the MCE constructing the cluster session scheduling indication message according to the cluster session indication message and the stored cluster session information.

8. A system for a Multimedia Broadcast Multicast Service Coordination Entity (MCE) controlling cluster session setup, comprising:
a core network, configured to send a cluster session setup request message to a coordination entity MCE after receiving a cluster call setup request message;
an MCE, configured to after receiving the cluster session setup request message, reconstruct the cluster session setup request message to send to a related base station, and after receiving a cluster session setup response message responded by the related base station, reconstruct the cluster session setup response message to send to the core network, then construct a cluster session scheduling indication message according to a cluster session indication message responded thereto by the core network to send to the related base station, and notify the related base station to schedule a cluster session service; and
a base station, configured to perform a cluster session setup operation according to the cluster session setup request message sent by the MCE and send the cluster session setup response message to the MCE after the operation is completed.

9. The system according to claim 8, wherein,
the MCE is further configured to judge whether to accept the cluster session setup request according to a Quality of Service (Qos) parameter in the cluster session setup request message; and if the MCE accepts the cluster session setup request, then store cluster session information according to the cluster session setup request message, and reconstruct the cluster session setup request message.

10. The system according to claim 8, wherein,
the base station is further configured to set up a wireless access bearer for a cluster session according to the cluster session setup message, set up channel mapping for the cluster session according to the cluster session setup message and the wireless access bearer, perform a radio resource control protocol (RRC) connection reconfiguration with a user of the cluster session according to the cluster session setup message, and add a multicast address of the cluster session according to the cluster session setup message.

11. A Multimedia Broadcast Multicast Service Coordination Entity (MCE), wherein,
the MCE is configured to after receiving a cluster session setup request message, reconstruct the cluster session setup request message to send to a related base station, and after receiving a cluster session setup response message responded by the related base station, reconstruct the cluster session setup response message to send to the core network, then construct a cluster session scheduling indication message according to a cluster session indication message responded thereto by the core network to send to the related base station, and notify the related base station to schedule a cluster session service.

12. The MCE according to claim 11, wherein,
the MCE is further configured to judge whether to accept the cluster session setup request according to a Quality of Service (Qos) parameter in the cluster session setup request message; and if the MCE accepts the cluster session setup request, then store cluster session information according to the cluster session setup request message, and reconstruct the cluster session setup request message.
